# DEMANDE DE BREVET EUROPEEN

(11) **EP 0 558 403 A1**
(43) Date de publication de la demande: **01.09.1993**
(21) Numéro de dépôt: 93400465.6
(22) Date de dépôt: 23.02.1993
(51) Int. Cl.: G01N 21/88

(54) **Dispositif de contrôle de la surface interne d'un tube notamment d'un générateur de vapeur**

(30) Priorité: 28.02.1992 FR 9202402
(71) Demandeur: FRAMATOME, 92400 Courbevoie (FR)
(72) Inventeur: Bottura, Jocelyne, F-71100 Chalon-sur-Saone (FR); Grozellier, Michel, F-71240 Semecy Legrand (FR)
(74) Mandataire: Habasque, Etienne Joel Jean-François

(57) **Abrégé**

Ce dispositif est caractérisé en ce qu'il comporte une source laser (1) munie de moyens (3) de focalisation du faisceau émis par la source, adaptés pour émettre un faisceau sur un trajet optique (5) en direction d'une tête d'inspection (4), s'étendant dans le tube (T) et dont la position est commandée par des moyens de déplacement selon un mouvement en hélice, la tête (4) comportant des moyens (9) de déviation du faisceau émis sur le trajet, en direction de la surface interne du tube (T) et du faisceau réfléchi par celle-ci sur le trajet (5), des moyens (11) de déviation du faiseau réfléchi disposés sur le trajet (5), et adaptés pour dévier au moins une partie du faisceau réfléchi vers des moyens (12) d'analyse, reliés à des moyens (13,14) de pilotage des moyens de focalisation (3) du faisceau émis sur le trajet, pour maintenir ce faisceau focalisé sur la surface interne du tube et à des moyens (14) de cartographie de la surface interne du tube (T), à partir des informations de sortie de ces moyens d'analyse et de la position de la tête d'inspection (4).

## Description

La présente invention concerne un dispositif de contrôle de la surface interne d'un tube, notamment d'un générateur de vapeur.

Ces générateurs de vapeur sont par exemple utilisés dans les centrales nucléaires à eau pressurisée.

De tels générateurs de vapeur comportent un faisceau de tubes présentant chacun la forme générale d'un U dont les extrémités sont fixées sur une plaque dite tubulaire et sont reliées respectivement à des entrées et des sorties de fluide primaire du générateur.

Cette fixation des extrémités de chaque tube sur la plaque tubulaire est par exemple réalisée par soudage et dudgeonnage.

En cours de fonctionnement, ces zones de fixation sont soumises à des contraintes relativement sévères et il est donc nécessaire de contrôler la qualité du tube au niveau de ces zones de fixation.

En effet, les soudures ou les opérations de dudgeonnage peuvent engendrées à ces extrémités des tubes, des micro-fissures se traduisant par des zones de fragilisation de ceux-ci.

Les techniques classiques d'examen de ces zones de fixation par exemple par ultra-sons ou courants de Foucault, ne peuvent que difficilement déceler ce type de micro-fissures, dans la mesure où leur pouvoir de résolution est trop faible.

On connait également dans l'état de la technique, un certain nombre d'appareils utilisant des faisceaux laser, comme par exemple des microscopes à balayage laser ou des dispositifs d'analyse basés sur les principes d'interférométrie laser, pour analyser certaines surfaces.

Cependant, tous ces appareils ont été développés pour analyser des surfaces planes et parfaitement accessibles.

On connait également dans l'état de la technique des dispositifs de contrôle basés sur des dispositifs optiques classiques à savoir des endoscopes ou des micro-caméras.

Cependant, les endoscopes ne permettent que très difficilement d'examiner la surface interne d'un tube et les micro-caméras nécessitent un apport de lumière extérieure important ainsi qu'une répartition homogène de cette lumière sur la surface à examiner.

On conçoit que ceci est extrémement difficile à réaliser sur la surface interne d'un tube.

Ainsi, tous les dispositifs connus dans l'état de la technique sont relativement peu adaptés à la détection de micro-défauts de surface dans un tube soit pour des raisons de pouvoir de résolution, soit pour des contraintes géométriques dues à la pièce à examiner, ceci étant en particulier le cas pour les appareils d'interférométrie laser, qui nécessitent des pièces planes et l'utilisation de marbres ou de tables à coussins d'air, pour s'affranchir des perturbations dues aux vibrations.

Le but de l'invention est donc de résoudre ces problèmes en proposant un dispositif de contrôle de la surface interne d'un tube, notamment d'un générateur de vapeur, qui soit simple, fiable et dont le pouvoir de résolution soit extrêmement élevé.

A cet effet, l'invention a pour objet un dispositif de contrôle de la surface interne d'un tube, notamment d'un générateur de vapeur, caractérisé en ce qu'il comporte une source laser munie de moyens de focalisation du faisceau émis par cette source, adaptés pour émettre un faisceau laser sur un trajet optique en direction d'une tête d'inspection, s'étendant dans le tube et dont la position dans celui-ci est commandée par des moyens de déplacement selon un mouvement en hélice, ladite tête d'inspection comportant des moyens de déviation du faisceau émis sur le trajet optique, en direction de la surface interne du tube à inspecter et du faisceau correspondant réfléchi par celle-ci, sur le trajet optique, des moyens de déviation du faiseau réfléchi, disposés sur le trajet optique, et adaptés pour dévier au moins une partie du faisceau réfléchi vers des moyens d'analyse de ce faisceau, reliés à des moyens de pilotage des moyens de focalisation du faisceau émis par la source sur le trajet optique, pour maintenir ce faisceau focalisé sur la surface interne du tube et à des moyens de cartographie de la surface interne du tube, à partir des informations de sortie de ces moyens d'analyse et de la position de la tête d'inspection et en ce que les moyens d'analyse comprennent également des moyens de pilotage de la puissance du faisceau laser émis par la source.

Selon un mode de réalisation, le trajet optique comporte deux portions à peu près perpendiculaires l'une par rapport à l'autre, l'une s'étendant entre la source laser et un pentaprisme de renvoi fixe et l'autre entre le pentaprisme et la tête d'inspection.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant le fonctionnement d'un dispositif selon l'invention;
- la Fig.2 représente une vue schématique d'un mode de réalisation de moyens de déplacement d'une canne de support d'une tête d'inspection entrant dans la constitution d'un dispositif selon l'invention;
- la Fig.3 représente une vue schématique illustrant l'implantantion des moyens de commande du déplacement de la tête;
- les Fig.4,5,6 et 7 représentent différentes étapes illustrant la mise en place d'une tête d'inspection entrant dans la constitution d'un dispositif selon l'invention, dans un tube de générateur de vapeur; et
- la Fig.8 représente un schéma synoptique de moyens de cartographie entrant dans la constitution d'un dispositif selon l'invention.

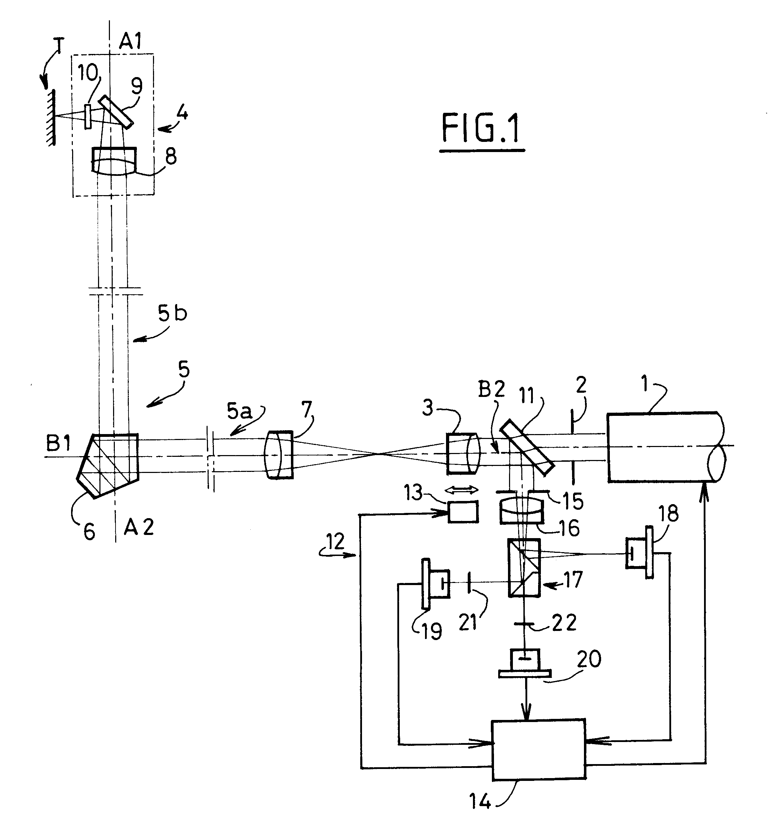

Ainsi qu'on peut le voir sur la Fig.1, un dispositif de contrôle de la surface interne d'un tube T notamment d'un générateur de vapeur, selon l'invention, comporte une source laser permettant d'engendrer un faisceau laser collimaté, cette source étant désignée par la référence générale 1 sur cette figure.

Cette source comporte par exemple une diode laser de type connu en soi et est associée à un diaphragme 2 à ouverture variable, permettant d'éviter la déperdition d'énergie de ce faisceau sur le trajet optique.

Cette source laser est également munie de moyens 3 de focalisation du faisceau émis par cette source, adaptés pour émettre un faisceau laser sur un trajet optique en direction d'une tête d'inspection désignée par la référence générale 4 sur cette figure.

Ces moyens de focalisation sont par exemple constitués par une lentille dont le déplacement est piloté par un organe piézo-électrique.

Le trajet optique du faisceau laser est quant à lui désigné de façon générale par la référence 5 et sera décrit plus en détail par la suite, mais on peut déjà constater en regard de cette figure 1, qu'il comporte deux portions, l'une 5a et l'autre 5b, s'étendant à peu près perpendiculairement l'une par rapport à l'autre.

Un pentaprisme de renvoi fixe désigné par la référence générale 6 sur cette Fig.1, est disposé entre ces deux portions de trajet optique pour assurer la continuité optique entre ces deux portions du trajet.

Des lentilles 7 et 8 sont également disposées sur ce trajet optique, l'une 7 dans la première portion de celui-ci et l'autre 8, dans la seconde portion de celui-ci , par exemple à l'entrée de la tête d'inspection 4 mentionnée précédemment.

Comme cela sera décrit plus en détail par la suite, cette tête d'inspection 4 qui s'étend dans le tube T et dont la position dans celui-ci est commandée par des moyens de déplacement selon un mouvement en hélice, comporte des moyens 9 de déviation du faisceau émis sur le trajet optique par la source laser, en direction de la surface interne du tube à inspecter et du faisceau correspondant réfléchi par celle-ci, sur le trajet optique.

Ces moyens de déviation sont par exemple associés à une vitre de protection 10.

On conçoit donc que les faisceaux laser émis par la source et réfléchi par le tube T, transitent dans le même trajet optique, de façon connue.

Les moyens de déviation 9 de la tête d'inspection peuvent être constitués par un miroir.

Par ailleurs, des moyens de déviation d'au moins une partie du faisceau réfléchi, sont également disposés par exemple dans la première portion 5a du trajet optique.

Ces moyens sont désignés par la référence générale 11 sur cette figure 1 et sont adaptés pour dévier au moins une partie de ce faisceau réfléchi vers des moyens d'analyse de ce faisceau, désignés par la référence générale 12 sur cette figure. Ces moyens d'analyse 12 sont reliés à des moyens 13 de pilotage des moyens de focalisation 3 du faisceau émis par la source dans le trajet optique, pour maintenir ce faisceau focalisé sur la surface interne du tube T.

Ces moyens de déviation comprennent par exemple une lame semi-transparente.

Les moyens d'analyse 12 sont également reliés à des moyens 14 de cartographie de la surface interne du tube à partir des informations de sortie de ces moyens d'analyse et de la position de la tête d'inspection 4 dans le tube, délivrée par exemple par des moyens de détermination de la position des moyens de déplacement de la tête.

Ces moyens de cartographie sont par exemple formés par une partie d'un calculateur.

Ces moyens d'analyse peuvent également comporter des moyens de pilotage de la puissance du faisceau laser émis par la source, pour adapter celle-ci aux conditions d'exploration de la surface interne du tube et pour interrompre périodiquement toute émission de faisceau par cette source, afin de donner aux moyens d'analyse, une référence de noir.

Ainsi qu'on peut le voir sur cette figure, le faisceau réfléchi dévié par les moyens de déviation 11 passe tout d'abord dans un diaphragme 15 associé à une lentille 16 avant d'être dirigé vers des moyens 17 de division de ce faisceau, permettant de diviser ce faisceau en trois portions, dirigées vers trois photodétecteurs désignés par les références 18,19 et 20 respectivement.

Les photodétecteurs 19,20 sont associés respectivement à des diaphragmes 21 et 22 à ouverture fixe, permettant d'obtenir une section constante du faisceau lumineux frappant chacun de ces photodétecteurs, les sections de ces faisceaux lumineux étant déterminées l'une par rapport à l'autre et en fonction des caractéristiques de ces photodétecteurs et du trajet optique, de façon connue.

Les informations de sortie de ces photodétecteurs 19 et 20 sont entrées dans le calculateur 14 qui délivre un signal de commande des moyens de pilotage 13 des moyens de focalisation 3 décrits précédemment, pour maintenir le faisceau émis par la source 1, focalisé sur la surface interne du tube, de manière connue en soi.

Le photodétecteur 18 délivre quant à lui un signal électrique directement proportionnel à l'énergie lumineuse qu'il reçoit et qui correspond à une énergie réfléchie par la portion de surface interne inspectée.

Ce signal est également introduit dans le calculateur 14.

Ainsi qu'on l'a indiqué précédemment, ce calculateur agit en conséquence sur la source d'émission du faisceau laser et sur le diaphragme variable 2 afin d'adapter ceux-ci aux conditions d'inspection rencontrées.

On conçoit donc que le dispositif qui vient d'être décrit est un dispositif qui permet de réaliser automatiquement une focalisation d'un faisceau laser sur la surface interne d'un tube, en déterminant des corrections à apporter à la position de moyens de focalisation en fonction des variations géométriques rencontrées sur la surface interne de ce tube, ces corrections permettant en association avec des informations de position de la tête d'inspection dans le tube, de réaliser une cartographie de cette surface interne du tube.

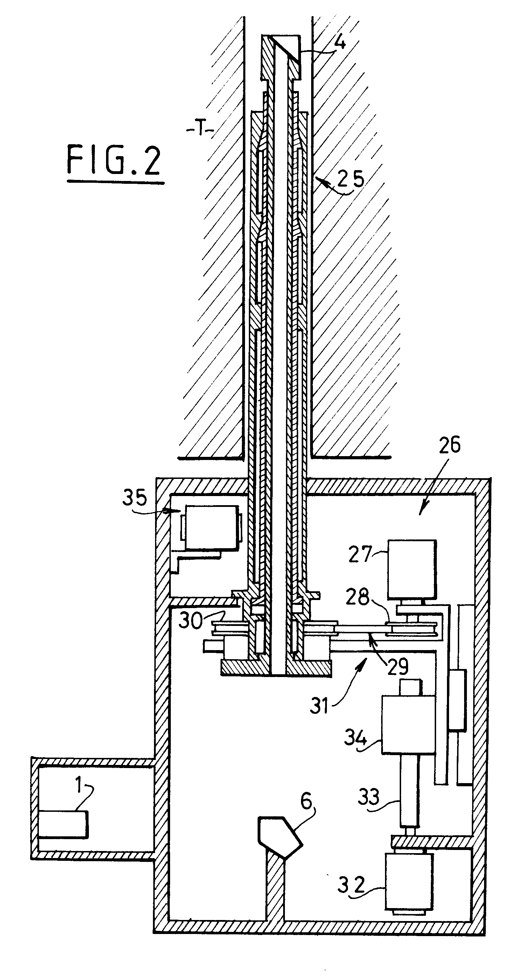

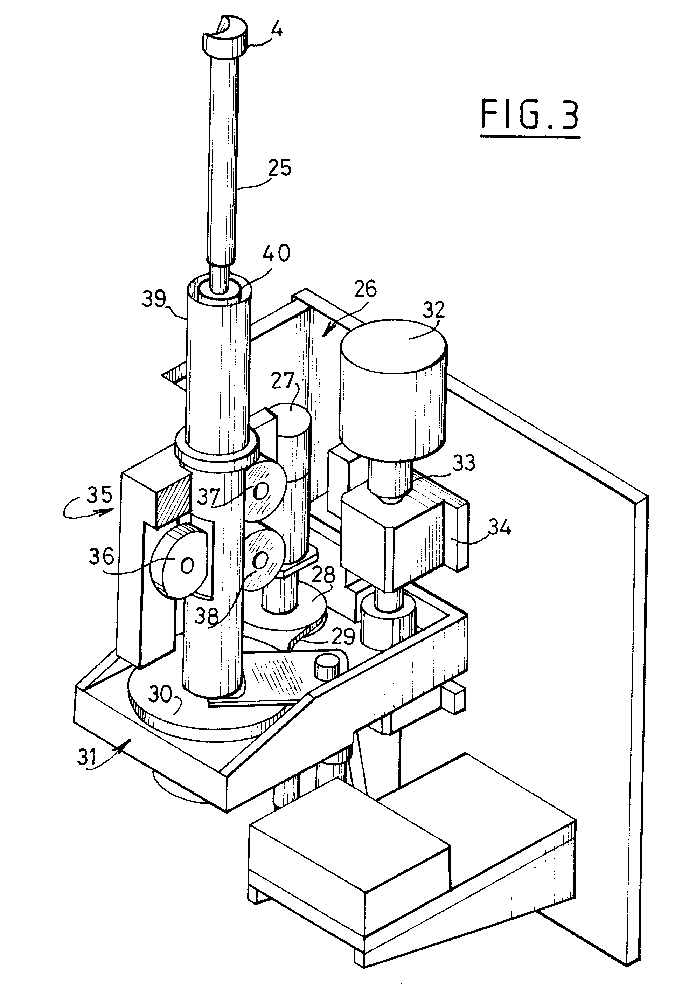

Ainsi qu'on peut le voir sur les Fig.2 et 3, la tête d'inspection désignée par la référence générale 4, est fixée à l'extrémité d'une canne de support désignée par la référence générale 25 sur ces figures.

Cette canne est creuse et son extrémité opposée à celle portant la tête d'inspection, est associée aux moyens 26 de déplacement de cette tête selon un mouvement en hélice dans le tube T.

Par ailleurs, cette extrémité de la canne 25 est également disposée en regard du pentaprisme de renvoi fixe 6 décrit précédemment, de manière à permettre la propagation du faisceau laser d'une part entre la source laser 1 et le pentaprisme de renvoi 6 et d'autre part, entre ce pentaprisme 6 et la tête d'inspection 4 par l'évidement central de cette canne 25, qui délimite alors au moins en partie, la seconde portion 5b du trajet optique décrit en regard de la Fig.1.

Bien entendu, le faisceau réfléchi par la surface interne du tube T suit le même chemin en sens inverse.

Les moyens de déplacement de la tête 4 comprennent avantageusement un premier moto-réducteur désigné par la référence générale 27 sur ces figures, d'entraînement en rotation de la canne 25, par exemple par l'intermédiaire d'un pignon cranté 28 de sortie de ce moto-réducteur relié par l'intermédiaire d'une courroie crantée 29 à un pignon cranté correspondant 30 d'entraînement en rotation de l'extrémité correspondante de la canne.

Cet ensemble moto-réducteur d'entraînement en rotation, pignons et courroie crantée, est fixé sur une platine de support 31 dont la position en hauteur est déterminée par un second moto-réducteur 32 dont l'arbre de sortie coopère avec un système à vis-écrou 33,34 pour déplacer en translation cette platine 31 et donc la canne 25 et la tête d'inspection 4, dans le tube.

On notera que des moyens 35 de montée rapide de la canne en position dans le tube, peuvent également être prévus pour accélérer la mise en place de cet ensemble dans le tube.

Ces moyens peuvent être formés par exemple par des moyens d'entraînement à galets 36,37 et 38 disposés de part et d'autre de la canne, l'un de ces galets, par exemple le galet 36, étant relié à un moto-réducteur d'entraînement non représenté, tandis que les autres constituent des galets de guidage.

Plus particulièrement, ces galets sont en appui contre un fourreau 39 disposé autour de la canne 25 et dont la fonction sera décrite plus en détail par la suite.

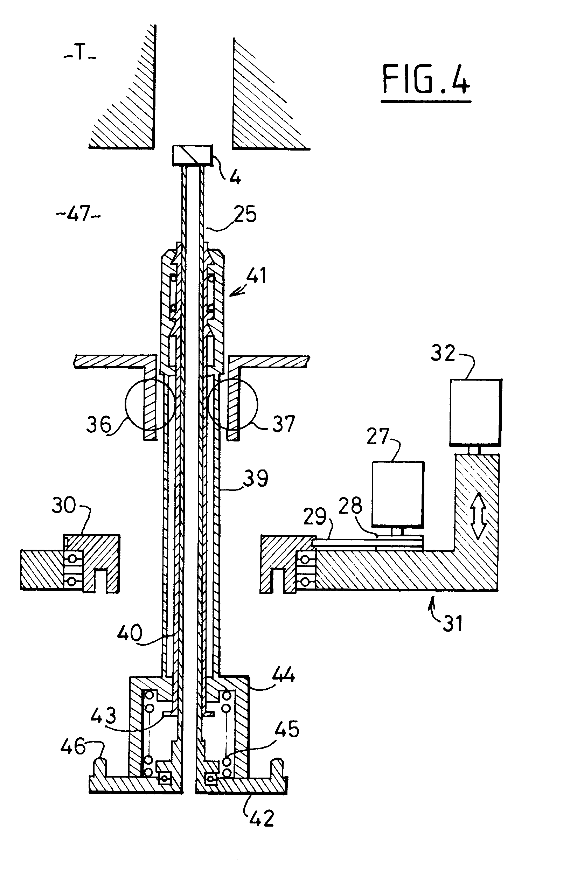

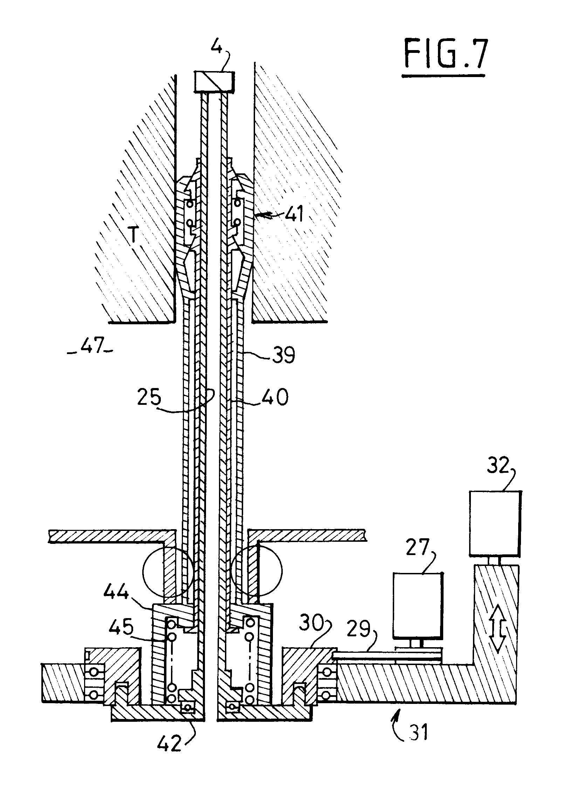

En effet, et comme on peut le voir sur les figures 4 à 7, la canne 25 portant à l'une de ses extrémités la tête d'inspection 4, est disposée dans le fourreau 39 et est montée coulissante dans celui-ci.

Un manchon intermédiaire 40 est également interposé entre cette canne 25 et ce fourreau 39.

Comme cela sera décrit plus en détail par la suite, ce manchon est adapté pour déplacer des moyens expansibles 41, prévus à l'une des extrémités du fourreau, vers une position active de centrage et de maintien en position de la tête 4 dans le tube T.

A leurs extrémités libres, la canne 25, le manchon intermédiaire 40 et le fourreau 39, comportent des embases respectivement 42, 43 et 44.

Des moyens élastiques 45 sont interposés entre l'embase 44 du fourreau 39 et l'embase 42 de la canne 25 pour solliciter ces embases en direction l'une de l'autre.

On conçoit donc que dans la première phase de mise en place de cet ensemble représentée sur la Fig.4, les moyens 35 de déplacement rapide de cet ensemble, constitués par exemple par les galets d'entraînement 36 et les galets de guidage dont un seul 37 est représenté sur ces figures, sont alimentés pour provoquer un déplacement rapide de cet ensemble à l'intérieur du tube T.

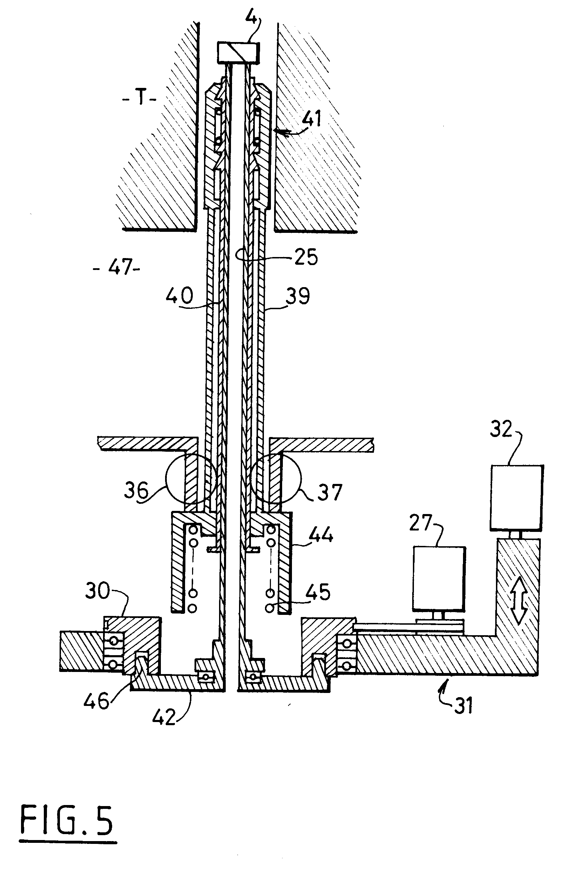

Comme représenté sur la Fig.5, lors de la remontée de cet ensemble, l'embase 42 de la canne, vient en contact contre le pignon d'entraînement 30 porté par la platine de support 31, de manière que des pions d'entraînement 46 de cette embase viennent s'engager dans des évidements correspondants du pignon d'entraînement 30.

La remontée de l'ensemble se poursuit tant que l'embase 44 du fourreau n'est pas en appui contre la plaque tubulaire 47.

Dans cette position, la position de la tête dans le tube est déterminée par la position de la platine de support 31 et le fourreau 39 est également engagé dans le tube T.

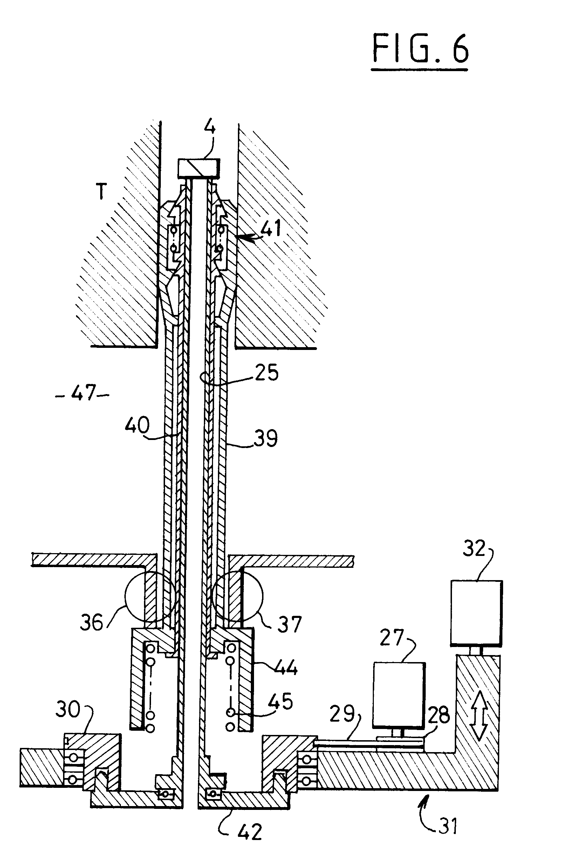

La phase suivante représentée sur la Fig.6, consiste à déplacer le manchon intermédiaire 40 d'une position escamotée vers une position active, de manière à provoquer le déplacement des organes expansibles 41 du fourreau 39 de leur position escamotée vers leur position active pour assurer un bon centrage et un bon maintien en position de la tête 4 dans le tube T.

Une fois ces opérations de montée et de centrage effectuées, les moto-réducteurs 27 de mise en rotation de la canne et 32 de déplacement en translation de celle-ci dans le tube par remontée de la platine de support 31, peuvent être alimentés pour assurer des déplacements correspondants de la tête dans le tube et donc un balayage de la surface interne de celui-ci par cette tête, les moyens élastiques 45 sollicitant l'embase 42 de la canne 25 en direction de l'embase 44 du fourreau 39.

Bien entendu, d'autres modes de réalisation des moyens de déplacement de la tête d'inspection 4 dans le tube peuvent être envisagés, de même que d'autres moyens de centrage de celle-ci dans ce tube.

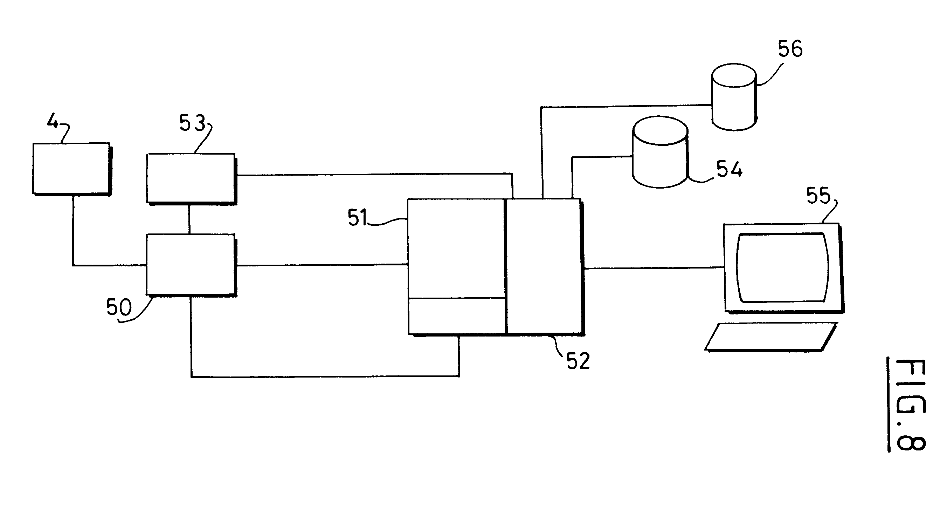

On a représenté sur la Fig.8, un schéma synoptique illustrant le fonctionnement des moyens de cartographie entrant dans la constitution du dispositif selon l'invention.

Sur cette figure, on peut constater que la tête d'inspection 4 permet de délivrer des informations, à travers des moyens de contrôle par exemple des sorties de cette tête, désignés par la référence générale 50 sur cette figure, à un module d'acquisition de données 51.

Cette acquisition de données se fait sous le contrôle d'un module de supervision 52 pilotant également des modules 53 d'alimentation des moto-réducteurs décrits précédemment, à travers les moyens de contrôle 50.

Un module 54 permet de stocker ces différentes acquisitions avant leur traitement dans le module 52, une éventuelle visualisation sur un écran 55 et un archivage dans un module 56.

Le module de traitement désigné par la référence générale 52 permet de réaliser une cartographie de la zone du tube inspectée en associant les informations de corrections de focalisation appliquées sur les moyens de focalisation 3 avec par exemple les informations de pilotage des moto-réducteurs, permettant de déterminer la position de la tête dans le tube.

Ces différentes informations de cartographie peuvent être stockées et visualisées pour déterminer la présence de micro-défauts ou de micro-fissures sur la surface interne du tube et de localiser ces défauts le cas échéant.

Ce dispositif peut être utilisé pour contrôler les zones de fixation de tubes sur les plaques tubulaires, par exemple des générateurs de vapeur utilisés dans des centrales nucléaires ou autres, mais peut également trouver des applications dans d'autres domaines.

## Revendications

1. Dispositif de contrôle de la surface interne d'un tube (T), notamment d'un générateur de vapeur, caractérisé en ce qu'il comporte une source laser (1) munie de moyens (3) de focalisation du faisceau émis par cette source, adaptés pour émettre un faisceau laser sur un trajet optique (5) en direction d'une tête d'inspection (4), s'étendant dans le tube (T) et dont la position dans celui-ci est commandée par des moyens (26) de déplacement selon un mouvement en hélice, ladite tête d'inspection (4) comportant des moyens (9) de déviation du faisceau émis sur le trajet optique, en direction de la surface interne du tube (T) à inspecter et du faisceau correspondant réfléchi par celle-ci, sur le trajet optique (5), des moyens (11) de déviation du faisceau réfléchi, disposés sur le trajet optique (5), et adaptés pour dévier au moins une partie du faisceau réfléchi vers des moyens (12) d'analyse de ce faisceau, reliés à des moyens (13,14) de pilotage des moyens de focalisation (3) du faisceau émis par la source sur le trajet optique, pour maintenir ce faisceau focalisé sur la surface interne du tube et à des moyens (14) de cartographie de la surface interne du tube (T), à partir des informations de sortie de ces moyens d'analyse et de la position de la tête d'inspection (4) et en ce que les moyens d'analyse (14) comprennent des moyens de pilotage de la puissance du faisceau laser émis par la source (1).

2. Dispositif selon la revendication 1, caractérisé en ce que le trajet optique (5) comporte deux portions (5a,5b) à peu près perpendiculaires l'une par rapport à l'autre, l'une (5a) s'étendant entre la source laser (1) et un pentaprisme de renvoi fixe (6) et l'autre entre le pentaprisme (6) et la tête d'inspection (4).

3. Dispositif selon la revendication 2, caractérisé en ce que les moyens (3) de focalisation du faisceau laser émis par la source (1) et les moyens de déviation (11) du faisceau laser réfléchi, sont disposés dans la première portion (5a) du trajet optique (5).

4. Dispositif selon l'une quelconque des revendications précédentes, caractérisé en ce que les moyens de cartographie comprennent un calculateur.

5. Dispositif selon l'une quelconque des revendications précédentes, caractérisé en ce que les moyens d'analyse comprennent au moins deux photodétecteurs (18,19,20) associés à des moyens de division (17) du faisceau réfléchi dévié.

6. Dispositif selon l'une quelconque des revendications précédentes, caractérisé en ce que les moyens de focalisation (3) comprennent une lentille dont le déplacement est piloté par un organe piézo-électrique.

7. Dispositif selon l'une quelconque des revendications précédentes, caractérisé en ce que la tête d'inspection (4) est disposée à l'extrémité d'une canne de support creuse (25) dont l'autre extrémité est associée aux moyens (26) de déplacement et dans laquelle se propagent les faisceaux laser émis et réfléchi.

8. Dispositif selon les revendications 2 et 7, caractérisé en ce que l'extrémité correspondante de la canne (25) est disposée en regard du pentaprisme de renvoi (6).

9. Dispositif selon l'une quelconque des revendications précédentes, caractérisé en ce qu'il comporte des moyens (41) de centrage de la tête d'inspection dans le tube.

10. Dispositif selon la revendication 9, caractérisé en ce que les moyens de centrage comprennent des moyens expansibles (41) prévus à l'extrémité d'un fourreau creux (39) disposé autour de la canne (25).

11. Dispositif selon la revendication 10, caractérisé en ce qu'un manchon intermédiaire (40) est disposé entre le fourreau et la canne et est monté déplaçable entre une position escamotée et une position active d'expansion des moyens expansibles (41) du fourreau (39).

12. Dispositif selon l'une quelconque des revendications précédentes, caractérisé en ce que les moyens (26) de déplacement de la tête comprennent un premier moto-réducteur (27) d'entraînement en rotation de la canne de support (25) et un second moto-réducteur (32) de déplacement en translation de la canne dans le tube.
